# EUROPEAN PATENT SPECIFICATION

(11) **EP 0 359 461 B1**
(45) Date of publication and mention of the grant of the patent: **25.11.1998**
(21) Application number: 89308991.2
(22) Date of filing: 05.09.1989
(51) Int. Cl.: G02B 5/28, G02B 5/30, H04N 9/31

(54) **Optical element and system**
Optisches Element und System
Elément optique et système

(30) Priority: 12.09.1988 JP 227814/88
(43) Date of publication of application: 21.03.1990
(73) Proprietor: SEIKO EPSON CORPORATION, Shinjuku-ku Tokyo (JP)
(72) Inventor: Sonehara, Tomio, Suwa-shi Nagano-ken (JP)
(74) Representative: Sturt, Clifford Mark

(56) References cited:
- EP-A- 83 090
- GB-A- 2 191 057
- US-A- 4 191 456
- US-A- 4 464 018
- H.A. MACLEOD: "Thin film optical filters", 2nd edition, pages 314-333, 1986, Adam Hilger Ltd, Bristol, GB; Section 8: "Tilted coatings"
- OMEGA OPTICAL INC. "Interference filters and coatings", catalogue, 1986, Bratteleboro, Vermont, US
- PATENT ABSTRACTS OF JAPAN, vol. 13, no. 7 (P-810)[3355], 10th January 1989; & JP-A-63 216 024 (SEIKO EPSON CORP.) 08-09-1988
- SOCIETY FOR INFORMATION DISPLAY (SID), 1986, Digest, pages 375-378; S. MOROZUMI et al.: "LCD full-color video projector"

## Description

The present invention relates to an optical element, and to an optical system preferably but not necessarily incorporating such an element.

Various optical systems comprising a pre-polarising beam splitter, a dichroic mirror and the like are disclosed in U.S. Patents Nos. 4,191,456, 4,461,542 and 4,464,018. In all of these systems, the polarisation properties of respective optical elements are employed independently of the wavelength selection properties of respective other optical elements, and vice versa.

The dichroic elements within such systems merely serve to separate the light in a passive manner, and no variation of the colour separation properties is possible.

A projection system is also known from SID '86 Digest, page 375 (1986). In such a system, white light from a light source is separated into light of respective colours, and the coloured light is modulated to create an image by means of light valves. The modulated light is then synthesised for projection.

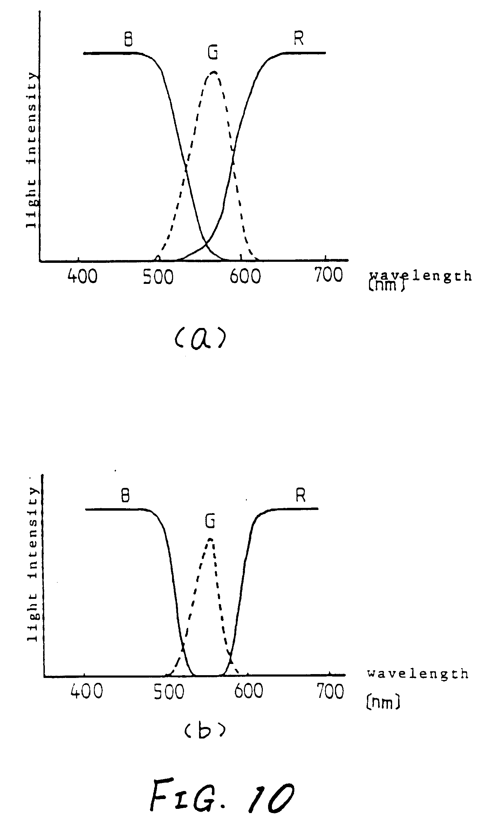

In such a previous projection system, coloured light (in this instance red, green and blue) is separated from white light by a first wavelength selective optical element having wavelength selection properties as shown in Figure 10 (a). Light of the selected colours is synthesised by a further optical element having the same wavelength selection properties. Since the light passes through such a double wavelength selection process, loss of light having wavelengths in the skirt regions of the wavelength selection curves in Figure 10 (a) is substantial. Figure 10 (b) shows the spectral intensity after the light has undergone synthesis. The loss of light can be seen to be about fifty percent, comparing the light intensity of Figure 10 (a) with the light intensity of Figure 10 (b). Consequently, the rate of utilisation of the light flux in the projection system is low and a high power light source is required.

According to the present invention, there is provided an optical element having a first dichroic layer on one surface thereof and a second dichroic layer on another surface thereof for wavelength selection of reflected light and transmitted light, wherein:
(i) the first dichroic layer reflects red light when the incident light is P-polarised and reflects yellow light when the incident light is S-polarised; and
(ii) the second dichroic layer reflects blue light when the incident light is P-polarised and reflects cyan light when the incident light is S-polarised.

The present invention also provides an optical system comprising a first optical element for separating light from a light source into light of respective colours, light valves for modulating the coloured light, and a second optical element for synthesising the modulated coloured light, wherein one of the first and second optical elements selectively reflects red and blue light, characterised in that the other of the first and second optical elements is an optical element according to the immediately preceding paragraph.

In a preferred form of the invention, the two dichroic layers cross one another at right angles. This may conveniently be achieved by forming the optical element from four right angled prisms adhered together and by coating each dichroic layer on selected surfaces of the prisms.

The present invention also provides an optical system comprising a first optical element for separating light from alight source into light of respective colours, light valves for modulating the coloured light, and a second optical light, where one of the first and second optical elements selectively reflects red and blue light, characterised in that the other of the first and second optical element is an optical element according to the immediately preceding paragraph.

Furthermore, at least one of the first and second optical elements may have polarisation-dependent wave-length selection properties.

The invention will be described further, by way of example, with reference to the accompanying drawings, in which:-
Figure 1 is a sectional view through an optical element according to the present invention;
Figure 2 illustrates the method of construction of the element shown in Figure 1;
Figure 3 (a) shows the wave-length selection properties of a dichroic layer of the element for reflecting red and yellow light, and Figure 3 (b) shows the wavelength selection properties of a dichroic layer of the element for reflecting blue and cyan light;
Figure 4 is a diagrammatic view of an optical system;
Figure 5 (a) and 5 (b) show the wavelength selection properties of first and second optical elements, respectively, of the optical system shown in Figure 4, and Figure 5 (c) shows the spectrum after synthesis;
Figure 6 is a diagrammatic view of a full colour projection system according to the present invention;
Figure 7 (a) shows the wavelength selection properties of a first optical element of the projection system, and Figures 7 (b) and 7 (c) show the wavelength selection properties of a second optical element of the projection system;
Figure 8 is a diagrammatic view of a multi-colour projection system;
Figure 9 (a) and 9 (b) show the wavelength selection properties of first and second optical elements, respectively, of the projection system shown in Figure 8, and Figure 9 (c) shows the spectrum after synthesis; and
Figure 10 (a) shows the wavelength selection properties of a prior art optical element, and Figure 10 (b) shows the spectrum after synthesis.

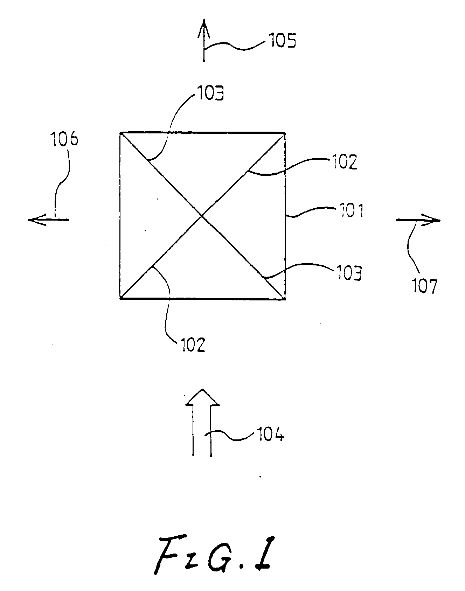

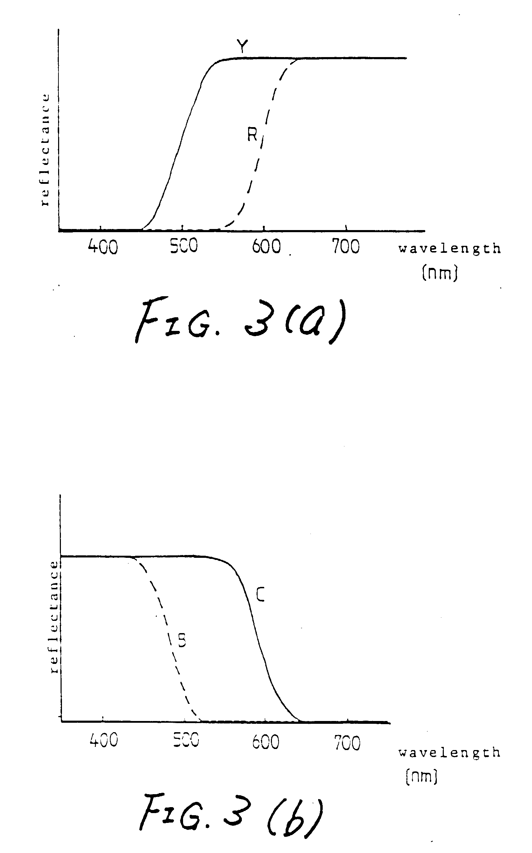

Referring initially to Figure 1, an optical element according to the present invention comprises four right angled prisms 101 adhered together and having dichroic layers 102, 103 coated on selected ones of their right angled plane surfaces, which are sandwiched together, to provide intersecting wavelength selective layers as shown. The dichroic layer 102 functions as a red light (R) reflective layer with respect to P-polarised light and as a yellow light (Y) reflective layer with respect to S-polarised light. The dichroic layer 103 functions as a blue light (B) reflective layer with respect to the P-polarised light and as a cyan light (C) reflective layer with respect to the S-polarised light. Figures 3 (a) and 3 (b) show the wavelength selection properties, Figure 3 (a) corresponding to the dichroic layer 102, and Figure 3 (b) corresponding to the dichroic layer 103. In Figures 3 (a) and 3 (b), the dotted line represents the wavelength selection with respect to the P-polarised light, and the solid line represents the wavelength selection with respect to the S-polarised light.

As is clear from Figure 3, the transition or skirt regions for the wavelength selection in each case are in the visible range of light from 400 nm to 700 nm, and the wavelength selection functions for the S-polarised light effectively do not overlap those for the P-polarised light.

Therefore, if incident light 104 enters the optical element shown in Figure 1, the polarisation of the light determines its separation into reflected light 106, 107 and transmitted light 105. For example, if linearly polarised light, which is parallel to the paper surface, enters the optical element, the linearly polarised light is P-polarised light with respect to the dichroic layers, and so the dichroic layers reflect red and blue light. As a result, the light 105 transmitted by the element is green, the light 106 reflected by the element is blue, and the light 107 reflected by the element is red. On the other hand, when white linearly polarised light, which is S-polarised, enters the optical element, the reflected light 106 is blue close to cyan, the reflected light 107 is yellow close to red, and hardly any transmitted light 105 emerges from the optical element. This is due to the fact that the light is affected by the reflection of cyan and yellow light. Thus, the separation properties can be determined by the polarisation of the incident light. This means that the colour of the light produced can be controlled by electrically controlling the polarisation of the incident light by means of electro-optical effects, etc.

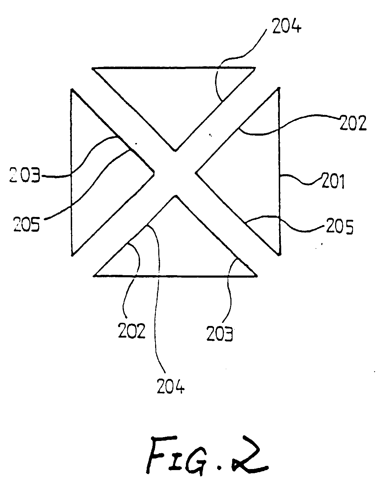

Figure 2 shows how the structure of the optical element of Figure 1 may be produced. The dichroic layers are coated on selected ones of the surfaces, which meet in a right angle, of the respective prisms 201. There are two alternatives for the coating of the surfaces. One alternative is for the first and second dichroic layers to be coated on the surfaces designated 202 and 203, respectively. The other alternative is for the first and second dichroic layers to be coated on the surfaces designated 204 and 205, respectively. The dichroic layers in each case may be prepared in the normal manner for producing an optical thin film. In both cases, two complex dichroic layers are combined. However, a single dichroic layer may simply be coated on the longest side of one right angled prism, and this longest side may be adhered to the longest side of another right angled prism. In this simpler structure, the selective wavelength can still be determined by the incident polarised light.

In the above example, right angled prisms were used. A P-type colour separation prism can produce wavelength selection properties for reflected and transmitted light having polarisation dependency in the same manner.

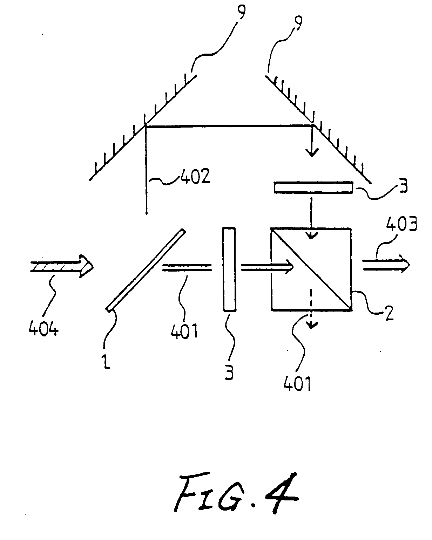

Figure 4 shows an optical system for separating multiple, in this instance four, colours. In this example, the incident light is projected by way of a first and a second optical element without undergoing adverse double wavelength selection effects.

The optical system shown in Figure 4 has as main structural elements a first optical element 1, a second optical element 2, light valves 3 and reflective mirrors 9. Light 404 from a light source (not shown) is separated by the first optical element into transmitted light 401 and reflected light 402. The transmitted light 401 and the reflected light 402 are modulated by the light valves 3 before striking the second optical element 2.

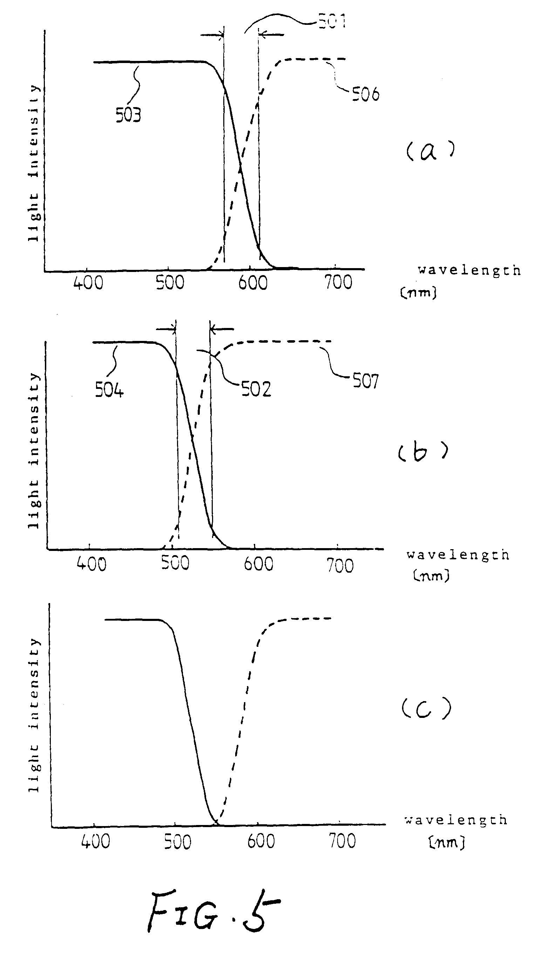

Figure 5 (a) shows the wavelength selection properties of he first optical element 1. In Figure 5 (a), the reference numeral 503 represents the transmitted light, and the reference numeral 506 represents the reflected light. The reference numeral 501 indicates the area where the two transition regions of the wavelength selection functions occur.

Figure 5 (b) shows the wavelength selection properties of the second optical element. The reference numeral 504 represents the transmitted light and the reference numeral 507 represents the reflected light. The reference numeral 502 indicates the area where the transition regions of the wavelength selection functions occur. As can be seen, the area 501 does not overlap the area 502. As a result, the light 403 output after synthesis has a spectrum as shown in Figure 5 (c). Since such light is not doubly affected by the same wavelength selection properties, the reduction in light intensity as shown by Figures 10 (a) and 10 (b) is avoided.

In the system shown in Figure 4, the light produced is magenta being synthesised from blue and red. When the light valves 3 are provided between the first optical element and the second optical element as shown and the image is modulated, a multi-colour display can be achieved.

The optical element 1 is preferably of conventional structure, and the optical element 2 preferably has a structure as described with reference to Figure 1. However, either of the first and second optical elements may have wavelength selection properties and dichroic layers as described in relation to Figure 1.

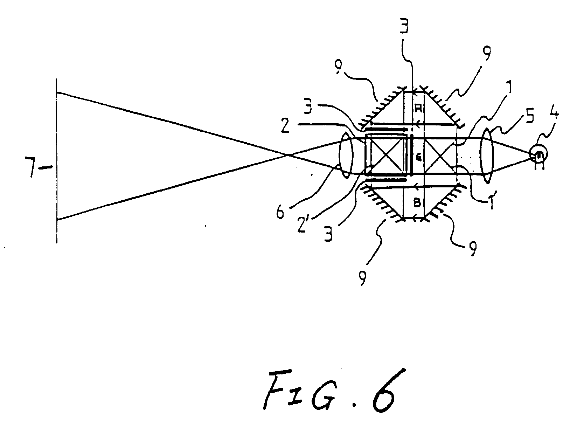

For achieving a full colour display, a projection system as shown in Figure 6 having a first optical element according to the prior art with dichroic layers for selectively reflecting red and blue light and a second optical element according to the present invention with dichroic layers for selectively reflecting yellow and cyan light can be used. Alternatively, the arrangement of the first and second optical elements may be reversed. For the deposition of the dichroic layers in each case, the cross shape is advantageous since the optical length is then short.

By using light valves for modulating specific polarised light, the light of each colour entering the second optical element according to the invention may be limited to a specific polarisation (e.g. S-polarised light or P-polarised light). Further, the polarisation of the light which is reflected by the second optical element and the polarisation of the light which is transmitted by the second optical element may be different. With respect to the light of each colour which is selectively reflected by the second optical element, the wavelength selection properties of the first optical element do not overlap the wavelength selection properties of the second optical element. The coloured light which is sequentially transmitted through both elements is not affected by the wavelength selection properties of the second optical element with respect to different polarised light.

Figure 6 is a structural view of the projection system for providing the full colour display. The first optical element comprises a blue reflective dichroic mirror 1 and a red reflective dichroic mirror 1' in the shape of a cross. The second optical element comprises an S-polarised cyan reflective dichroic mirror 2 and an S-polarised yellow reflective dichroic mirror 2' in the shape of a cross. A white light source 4 supplies light to the first optical element by way of a collimating lens 5. Light issuing from the second optical element is directed by a projection lens 6 onto a screen 7. Mirrors 9 reflect blue and red light from the mirrors 1, 1' towards respective light valves 3 for image forming, using a TN mode liquid crystal matrix type panel in this example. A further such light valve 3 is provided between the two optical elements.

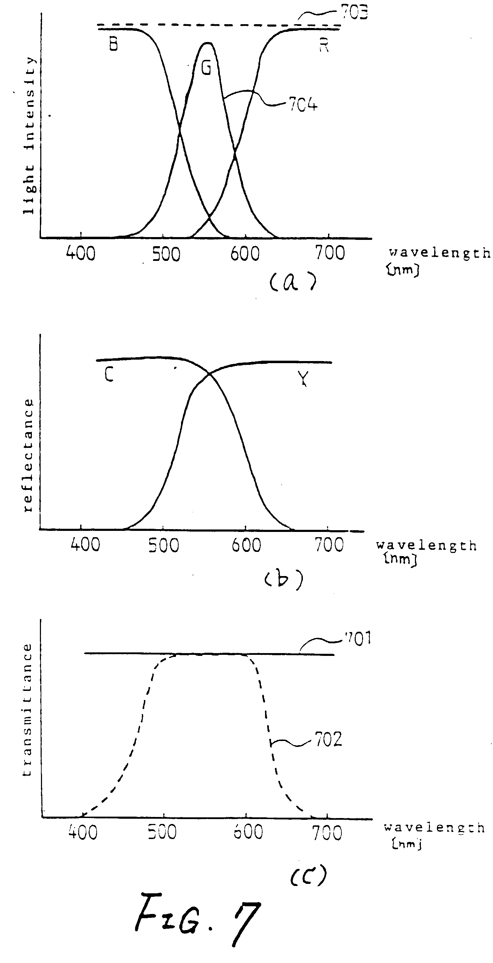

The light from the white light source 4 is collimated by the collimating lens 5 and then enters the first optical element. The first optical element has colour separation properties as shown in Figure 7 (a) and divides the source light into red light (R), green light (G) and blue light (B). The red light (R) and blue light (B) are separated by reflection and have at least S-polarised components with respect to the dichroic mirrors of the first optical element. The red light (R) and blue light (B) are then reflected by the mirrors 9 and enter the light valves 3. The green light (G) passes directly into the respective light valve 3. Here, the polarisers are arranged in Nicol's disposition. Namely, the light valves for modulating the red light (R) and blue light (B) transmit S-polarised light and the light valve for modulating the green light (G) transmits P-polarised light. Therefore, the red light (R) and the blue light (B) enter the second optical element as S-polarised light. The green light (G) enters the second optical element as P-polarised light.

The second optical element comprises the S-polarised yellow reflective mirror 2 and the S-polarised cyan reflective mirror 2', and it has reflective properties as shown in Figure 7 (b) with respect to S-polarised light and transmission properties shown by the solid line in Figure 7 (c) with respect to P-polarised light. Consequently, the second optical element functions as a yellow mirror and a cyan mirror with respect only to S-polarised light, and it transmits the P-polarised light therethrough. The second optical element thus issues light in accordance with the functions shown in Figures 7 (a) and 7 (b) in response to incident blue light and red light, and in accordance with the functions shown in Figure 7 (a) and by the solid line 701 in Figure 7 (c) in response to incident green light. The blue and red light keep the wavelength properties selected by the first optical element, and the green light keeps the wavelength properties selected by the first optical element. This is due to the fact that for light of each colour, the transition region of the wavelength selection function of one optical element does not overlap the transition region of the wavelength selection function of the other optical element. In other words, light of a particular wavelength is not doubly affected by the selection.

The optical properties of each of the first and the second optical elements as mentioned in this example can be realised by a dichroic element, comprising multi-layer dielectric films, which can be obtained on the market. However, such a dichroic element exhibits unnecessary interference. Nevertheless, as long as one wavelength selection transition region does not overlap the other wavelength selection transition region, alternative optical elements can be employed in the present invention.

As described, the second optical element exhibits constant transmission properties (see the line 701 in Figure 7 (c)). Alternatively, the second optical element may have selection properties as shown by the dotted line 702 in Figure 7 (c) with respect to green light. In this case, the transition regions of the wavelength selection functions of the first optical element must not overlap the transition regions of the wavelength selection functions of the second optical element.

Further, if the colour separation properties as shown in Figure 7 (a) have a polarisation dependency which affect light of a specific polarisation, the transmitted light (in this case green light) may have a constant spectrum. In this case, a filter for giving the function as shown by the line 704 may be inserted into the light path between the first optical element and the second optical element to supply the colour separation of the first optical element. Then, the filter properties effectively should not overlap the transition region of the wavelength selection function of the second optical element.

Consequently, the problems generated when the transition regions for the wavelength selection functions associated with the separation and synthesis of coloured light overlap are eliminated. As a result, the reduction in light intensity obtained with the system shown in Figure 6 is only ten per cent to thirty percent by comparison with about fifty percent in the prior art. Thus, the projected light for the same light source may be increased to as much as twice that in the case of the prior art.

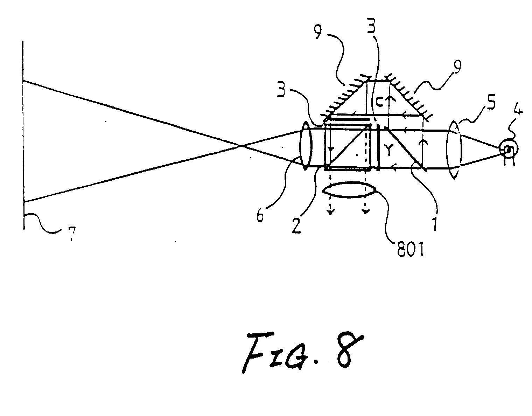

An alternative projection system for producing a multi-colour display is shown in Figure 8. In this case, the transition region for the wavelength selection of the second optical element for synthesising coloured light is large.

As before, the light from a light source 4 is collimated by a collimating lens 5 and is then separated by a first optical element 1 according to the prior art. The reflected component is changed in direction by mirrors 9 and then enters a light valve 3. On the other hand, the transmitted component enters a further light valve 3 directly. These components are synthesised by a second optical element 2. The synthesised light passes through a projection lens 6, thereby producing an image on a screen 7.

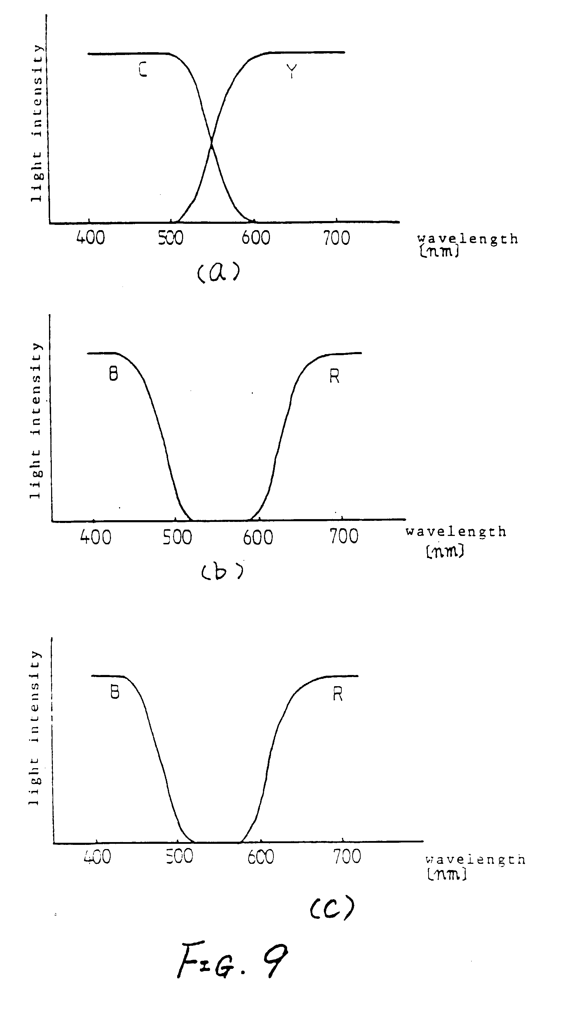

The separation properties of the first optical element are shown in Figure 9 (a) and the synthesis properties of the second optical element are shown in Figure 9 (b). The first optical element reflects cyan light (C) and transmits yellow light (Y) in the vicinity of 550 nm of the visible spectrum. On the other hand, the second optical element reflects blue light (B) and transmits red light (R). Therefore, yellow light (Y) and cyan light (C) having a wavelength in the range of 500 nm to 550 nm emerges as leakage light towards a lens 801. The wavelength distribution and the maximum intensity of the synthesised light is shown in Figure 9 (c).

If the transition region for the wavelength selection by the first optical element is large and the transition region for the wavelength selection by the second optical element is narrow, an excellent multi-colour display with colour purity for red, blue and black and magenta can be obtained by preventing the transition regions of the wavelength selection functions from overlapping.

In this case, the transition region for wave-length selection by the first optical element is larger, the polarising beam splitter operates over a large area. The first optical element may then reflect S-polarised light and transmits P-polarised light as described. If the second optical element operates in the same manner as the first optical element, almost no light loss occurs during transmission through the light valves, and the synthesis of the two images from the light valves is very effective. Further, an effective colour projection display can be obtained by giving the wavelength selection properties to either optical element. Namely, the light is separated according to polarisation and is synthesised according to wavelength. Concretely, a polarising beam splitter for the separation of visible light is employed for the first optical element and a dichroic mirror is employed for the second optical element.

In the present invention, the wavelength selection properties of an optical element can be controlled by incident polarised light. Further, a compact optical element can be constructed by joining prisms in a cube.

The present invention may be applied to various optical apparatus.

Furthermore, in an optical system having two optical elements for separating and synthesising coloured light, respectively, the wavelength selection transition regions effectively do not overlap. By further adding polarisation properties to the wavelength selection transition region, a projection display without significant loss of light and with high efficiency can be obtained. Since one optical element may determine the colour reproduction properties, the other optical element does not need sharp selection properties. Also, the focal length of the projection lens can be reduced to a minimum by disposing dichroic layers of the optical elements in the shape of a cross, whereby the design of the lens may be simplified.

## Claims

1. An optical element having a first dichroic layer (102) on one surface thereof and a second dichroic layer (103) on another surface thereof for wavelength selection of reflected light and transmitted light, wherein:
(i) the first dichroic layer reflects red light when the incident light is P-polarised and reflects yellow light when the incident light is S-polarised; and
(ii) the second dichroic layer reflects blue light when the incident light is P-polarised and reflects cyan light when the incident light is S-polarised.

2. An optical element according to claim 1 characterised in that the two dichroic layers cross one another.

3. An optical element according to claim 1 or 2 characterised in that the element comprises four right angled prisms (101, 201) adhered together, and in that the or each dichroic layer is coated on at least one surface of at least one of the right angled prisms.

4. An optical system comprising a first optical element (1) for separating light from a light source (4) into light of respective colours, light valves (3) for modulating the coloured light, and a second optical element (2) for synthesising the modulated coloured light, wherein one of the first and second optical elements selectively reflects red and blue light, characterised in that the other of the first and second optical elements is an optical element according to any of claims 1 to 3.

5. An optical system comprising a first optical element (1) for separating light from a light source (4) into light of respective colours, light valves (3) for modulating the coloured light, and a second optical element (2) for synthesising the modulated coloured light, wherein one of the first and second optical elements selectively reflects red and blue light, characterised in that the other of the first and second optical elements has two dichroic layers which selectively reflect yellow and cyan light.

6. An optical system according to claim 4 characterised in that the dichroic layers cross one another at right angles.

7. An optical system according to claims 5 or 6 characterised in that the wavelength selection properties of at least one of the first and second optical elements are polarisation-dependent.

8. A projector comprising a light source (4), an optical system according to any of claims 4 to 7, and means (6) for projecting the light synthesised by the second optical element onto a screen (7).

## Patentansprüche

1. Optisches Element, das auf seiner einen Oberfläche eine erste dichroitische Schicht (102) und auf seiner anderen Oberfläche eine zweite dichroitische Schicht (103) zur Wellenlängenselektion von reflektiertem Licht und durchgelassenem Licht aufweist, wobei:
(i) die erste dichroitische Schicht Rotlicht reflektiert, wenn das einfallende Licht P-polarisiert ist, und Gelblicht reflektiert, wenn das einfallende Licht S-polarisiert ist; und
(ii) die zweite dichroitische Schicht Blaulicht reflektiert, wenn das einfallende Licht P-polarisiert ist, und Cyanlicht reflektiert, wenn das einfallende Licht S-polarisiert ist.

2. Optisches Element nach Anspruch 1, dadurch gekennzeichnet, daß die zwei dichroitischen Schichten einander kreuzen.

3. Optisches Element nach Anspruch 1 oder 2, dadurch gekennzeichnet, daß das Element (4) aneinander haftende rechtwinklige Prismen (101, 102) aufweist und daß die oder jede dichroitische Schicht zumindest auf eine Oberfläche von zumindest einem der rechtwinkligen Prismen aufgetragen ist.

4. Optisches System, umfassend: ein erstes optisches Element (1) zum Trennen von Licht einer Lichtquelle (4) in Licht jeweiliger Farben, Lichtventile (3) zum Modulieren des farbigen Lichts sowie ein zweites optisches Element (2) zum Synthetisieren des modulierten farbigen Lichts, wobei eines der ersten und zweiten optischen Elemente selektiv Rot- und Blaulicht reflektiert, dadurch gekennzeichnet, daß das andere der ersten und zweiten optischen Elemente ein optisches Element nach einem der Ansprüche 1 bis 3 ist.

5. Optisches System, umfassend: ein erstes optisches Element (1) zum Trennen von Licht einer Lichtquelle (4) in Licht jeweiliger Farben, Lichtventile (3) zum Modulieren des farbigen Lichts sowie ein zweites optisches Element (2) zum Synthetisieren des modulierten farbigen Lichts, wobei eines der ersten und zweiten optischen Elemente selektiv Rot- und Blaulicht reflektiert, dadurch gekennzeichnet, daß das andere der ersten und zweiten optischen Elemente zwei dichroitische Schichten aufweist, die selektiv Gelb- und Cyanlicht reflektieren.

6. Optisches System nach Anspruch 4, dadurch gekennzeichnet, daß die dichroitischen Schichten einander im rechten Winkel kreuzen.

7. Optisches System nach Anspruch 5 oder 6, dadurch gekennzeichnet, daß die Wellenlängen-Selektionseigenschaften zumindest eines der ersten und zweiten optischen Elemente polarisationsabhängig sind.

8. Projektor, umfassend eine Lichtquelle (4), ein optisches System nach einem der Ansprüche 4 bis 7, sowie Mittel (6) zum Projizieren des von dem zweiten optischen Element synthetisierten Lichts auf einen Bildschirm (7).

## Revendications

1. Elément optique ayant une première couche dichroïque (102) sur une de ses surfaces et une seconde couche dichroïque (103) sur une autre de ses surfaces pour la sélection de longueur d'onde de la lumière réfléchie et de la lumière émise, dans lequel :
(i) la première couche dichroïque réfléchit la lumière rouge lorsque la lumière incidente subit une polarisation du type P et réfléchit la lumière jaune lorsque la lumière incidente subit une polarisation du type S ; et
(ii) la seconde couche dichroïque réfléchit la lumière bleue lorsque la lumière incidente subit une polarisation du type P et réfléchit la lumière cyan lorsque la lumière incidente subit une polarisation du type S.

2. Elément optique selon la revendication 1, caractérisé en ce que les deux couches dichroïques se croisent.

3. Elément optique selon la revendication 1 ou 2, caractérisé en ce que l'élément comprend quatre prismes à angle droit (101, 201) joints ensemble, et en ce que la ou chaque couche dichroïque est revêtue sur au moins une surface particulière d'au moins un des prismes à angle droit.

4. Système optique comprenant un premier élément optique (1) pour séparer la lumière en provenance d'une source de lumière (4) en lumière de couleurs respectives, des galvanomètres à cordes (3) pour moduler la lumière colorée, et un second élément optique (2) pour synthétiser la lumière colorée modulée, dans lequel un des premier et second éléments optiques réfléchit de manière sélective la lumière rouge et bleue, caractérisé en ce que l'autre des premier et second éléments optiques est un élément optique selon l'une quelconque des revendications 1 à 3.

5. Système optique comprenant un premier élément optique (1) pour séparer la lumière en provenance d'une source de lumière (4) en lumière de couleurs respectives, des galvanomètres à cordes (3) pour moduler la lumière colorée, et un second élément optique (2) pour synthétiser la lumière colorée modulée, dans lequel un des premier et second éléments optiques réfléchit de manière sélective la lumière rouge et bleue, caractérisé en ce que l'autre des premier et second éléments optiques possède deux couches dichroïques qui réfléchissent, de manière sélective, la lumière jaune et cyan.

6. Système optique selon la revendication 4, caractérisé en ce que les couches dichroïques se croisent à angle droit.

7. Système optique selon les revendications 5 ou 6, caractérisé en ce que les propriétés de sélection de longueur d'onde d'au moins un des premier et second éléments optiques sont dépendantes de la polarisation.

8. Projecteur comprenant une source de lumière (4), un système optique selon l'une quelconque des revendications 4 à 7, et des moyens (6) pour projeter la lumière synthétisée par le second élément optique sur un écran (7).
